# DEMANDE DE BREVET EUROPEEN

(11) **EP 3 249 266 A1**
(43) Date de publication de la demande: **29.11.2017**
(21) Numéro de dépôt: 17170087.5
(22) Date de dépôt: 09.05.2017
(51) Int. Cl.: F16J 15/02, F16J 15/06, F16J 15/08, F16J 15/12

(54) **ETANCHEITE STATIQUE HAUTE PRESSION**

(30) Priorité: 24.05.2016 FR 1600829
(71) Demandeur: ONIS, 13410 Lambesc (FR)
(72) Inventeur: FUMANAL, Yann, 13330 PELISSANNE (FR)
(74) Mandataire: GPI & Associés

(57) **Abrégé**

L'invention concerne un joint (1) d'étanchéité statique de type élastiquement déformable, ce joint (1) s'étendant en élévation parallèlement à une direction axiale (X) perpendiculaire à un plan de joint (YZ), le joint (1) formant une boucle close autour de la direction axiale (X) et présentant une section transversale dans chaque demi-plan transversal (XY) dont la forme permet notamment de s'assurer que le joint (1) est positionné correctement à l'intérieure d'une gorge (5) de forme sensiblement complémentaire.

Selon l'invention un tel joint (1) comporte un corps (25') en matière élastiquement déformable, chaque section transversale du joint (1) au repos étant un polygone non régulier et asymétrique transversal, chaque section transversale comprenant :
- un secteur de sommet (18) s'étendant d'une surface interne (18I) du secteur de sommet (18) à une surface externe de contre appui (18E) délimitant extérieurement un épaulement transversal externe (15) du joint (1),
- un secteur d'embase (22) du joint (1) situé en élévation partiellement sous le secteur de sommet (18).

## Description

L'invention concerne généralement le domaine de l'étanchéité plane entre un tronçon amont et un tronçon aval d'une structure dont l'intérieur est sous pression positive, e.g. une canalisation de fluide.

Cette étanchéité est dite statique quand elle est obtenue alors que le tronçon amont et le tronçon aval sont rigidement fixés l'un à l'autre, de manière démontable.

Selon l'invention, une étanchéité statique est visée pour des « hautes pressions », à savoir des valeurs positives de pression de fluide pouvant atteindre des valeurs de l'ordre de 42 MPa (420 Bars) à 75 MPa (750 Bars).

Dans ce domaine, l'invention propose notamment une étanchéité par montage d'un joint plein et élastiquement déformable.

Par contraste, un joint déformable plastiquement est une découpe plane en matière écrasable, interposée entre deux surfaces planes où l'étanchéité est à réaliser. Avec ces joints écrasables, l'obtention de l'étanchéité implique une déformation irréversible du joint.

Classiquement une étanchéité du type de celle de l'invention, prévoit le montage du joint déformable élastiquement dans une gorge concave formée dans l'un des tronçons amont ou aval, où est logé le joint. Par exemple, il s'agit d'un joint torique en élastomère. Selon les cas, pour le montage d'un joint plein et déformable élastiquement, la section de la gorge est rectangulaire, trapézoïdale ou parfois hexagonale.

L'invention est utile à de nombreuses applications industrielles où sont requises une tenue à des pressions et une sécurité élevées. Ainsi, l'invention peut typiquement trouver des applications au sein d'ensembles tels qu'ouvertures d'accès à des véhicules pressurisés tels qu'aéronefs et sous-marins. L'invention s'applique aussi à des ouvertures d'accès à des équipements industriels tels qu'autoclaves ou cuiseurs industriels, à des canalisations ou vannes d'installations chimiques, énergétiques ou pharmaceutiques, par exemple.

L'invention s'applique typiquement à un ensemble formant obturateur à action rapide (en anglais « Line Blind »), tel qu'illustré par les documents FR1264881, FR2288267, FR2323938, FR2447501, FR2672958, FR2733024 ou FR2756346.

Un tel obturateur est employé au sein d'une installation industrielle où des fluides sous pression doivent être mis en circulation à travers un réseau de canalisations. En cas de maintenance ou de modification du réseau, ou en cas d'urgence, il est souhaitable d'isoler de manière parfaitement certaine et étanche deux tronçons de canalisation contigus.

Historiquement, après interruption de la circulation de fluide dans la canalisation, deux brides de liaison des deux tronçons sont éloignées et une tape pleine (c'est-à-dire une paroi pleine) est fixée entre ces deux brides en s'interposant au passage de fluide. C'est cette plaque pleine qui donne à l'étanchéité son caractère certain.

Cette opération appelée platinage créée une isolation dite « positive », évitant les risques de fuite auxquels une vanne à clapet interne peut être sujette, ou de fausses manipulations. Cependant, le platinage requiert des moyens importants en termes de temps, de moyens techniques (levage) et de main d'oeuvre. Par exemple en cas d'urgence ou avec une canalisation de large diamètre ou difficilement accessible, le platinage n'est pas toujours approprié.

Le platinage par tape requiert de plus un arrêt coûteux de l'installation industrielle nécessitant l'intervention.

Les obturateurs à action rapide pallient les inconvénients du platinage par tape, et sont ainsi couramment montés à demeure sur des canalisations de diamètres variés (e.g. de 25mm à 1200mm).

Dans ces obturateurs à action rapide, un système d'excentriques permet d'écarter momentanément les brides pour interposer entre celles-ci une plaque coulissante nommée opercule. L'opercule est déplaçable entre deux positions: une position ouverte où la canalisation en regard d'une ouverture de l'opercule est passante et une position fermée où la canalisation est obturée comme avec un platinage.

Pour obtenir l'étanchéité, sur chaque face de l'opercule et pour chacune des positions ouverte et fermée, l'opercule est équipé de gorges de réception. Dans chacune de ces gorges est placé un joint élastiquement déformable. En regard de chaque joint, la bride correspondante possède un siège plan. Le système d'excentriques permet alors de serrer les brides de sorte que les sièges appuient et déforment élastiquement les joints contre l'opercule, générant ainsi l'étanchéité.

Classiquement, les gorges d'opercule pour obturateur à action rapide sont concaves et de contour circulaire dans leur plan de joint. Communément, des joints toriques à section transversale circulaire sont introduits dans une gorge de forme correspondante. Mais la section transversale de la gorge est parfois rectangulaire, hexagonale ou encore triangulaire.

Les joints connus sont en général fabriqués dans un matériau élastiquement déformable tel que caoutchouc nitrile, caoutchouc fluoré, polyéthylène. D'autres joints sont en graphite, en silicone ou encore en polyuréthane, voire comportent des pièces en métal.

Pour obtenir la déformation élastique, suivant une direction axiale perpendiculaire au plan de joint, l'épaisseur du joint au repos est sensiblement supérieure à la profondeur axiale de sa gorge réceptrice. Avant serrage étanche, le joint fait donc saillie hors de la gorge suivant la direction axiale. Au serrage, le joint se déforme élastiquement et créée des surfaces d'étanchéité contre les sièges.

Par exemple, des étanchéités connues proposent qu'au repos soit ménagé un volume vide d'expansion d'un joint torique dans une gorge trapézoïdale, de l'ordre de 9% à 10%. Un volume vide d'expansion d'un joint torique dans une gorge hexagonale est par exemple de l'ordre de 16%. Cependant, la répartition essentiellement proche du fond de gorge de tels volumes vides d'expansion ne favorise pas un contour du joint déformé garantissant une étanchéité sûre face à des hautes pressions.

Bien que les joints connus présentent de nombreuses qualités et sont largement employés e.g. pour des opercules d'obturateur à action rapide, à l'heure actuelle d'autres problèmes techniques restent sans solution acceptable en pratique.

De nos jours, les joints déformables élastiquement ne garantissent pas une étanchéité statique, durable et fiable lorsque la pression du fluide dans la canalisation dépasse certaines valeurs, e.g. de 42 MPa (420 Bars) à 75 MPa (750 Bars) au moins.

Par ailleurs, lors du montage in situ, des erreurs humaines peuvent aboutir à ce qu'un modèle de joint de forme inappropriée soit installé dans une gorge.

Aussi, un joint de forme acceptable mais de composition inappropriée de matériau(x) risque d'être installé suite à une erreur humaine.

Il est donc compliqué, voire impossible en pratique, d'être certain que le joint approprié est effectivement installé in situ, ce qui peut avoir de lourdes conséquences.

Notamment dans le cas des joints à section transversale non circulaire et tels que décrits notamment dans les documents EP1764533, EP2143981 et WO01/79730, il est actuellement compliqué, voire impossible, d'être certain que le joint est monté à l'intérieur de la gorge dans une position prédéterminée et de manière convenable, ce qui également peut conduire à des conséquences indésirables.

Un autre aspect illustré par l'exemple des obturateurs à action rapide est lié au maintien du joint au repos à l'intérieur de la gorge, depuis le moment de son montage jusqu'à ce que l'étanchéité soit obtenue par serrage des sièges de brides contre la face correspondante de l'opercule coulissant. Les gorges trapézoïdales ou hexagonales permettent généralement un certain maintien.

Cependant, l'enfoncement à force par déformation momentanée du joint lors de son insertion dans la gorge, peut altérer l'intégrité du joint. En particulier le joint risque d'être blessé ou abimé dans la mesure où la forme en section du joint n'est pas circulaire, mais comporte des saillies. Notamment pour les applications sous haute pression, il n'est pas acceptable qu'un joint soit altéré et risque ainsi de ne pas assumer pleinement sa fonction d'étanchéité. Egalement, il n'est pas acceptable qu'un joint soit blessé au montage, et présente ainsi des amorces de rupture.

Par ailleurs, certaines procédures de sécurité obligent à ne pas laisser en place des joints vieillissants. En effet, certains matériaux perdent avec le temps leurs qualités initiales. Par suite, l'efficacité d'un joint ne peut être garantie que dans certaines conditions et sur une durée donnée. Il est alors compliqué voire impossible actuellement d'être certain que sur le terrain, le joint adéquat est effectivement installé depuis une durée appropriée, ce qui peut également avoir des conséquences fâcheuses.

En outre, le joint doit être spécialement robuste et d'une structure simple et compacte tout en pouvant être produit de manière économique, y compris dans le cadre de séries limitées.

Dans ce contexte, il existe par exemple des joints de bride conçus pour être utilisés sur des tubes hydrauliques à brides, des tuyaux et des raccords à la norme SAEJ518C. Ces joints remplacent les joints toriques (en anglais « O-rings ») sans modification des logements existants (cf. : http://de.dichtomatik.com/en/produktkatalog/flachdichtungen/10 f).

Egalement, il existe certains joints dont la section forme un « T » (cf. : http://fr.prepol.com/produits/joints-en-t-et-joints-en-l). Ces joints en T offrent une bonne étanchéité statique et sont composés d'un profilé élastomère et de deux bagues d'appui en matière plastique (PTFE ou PEEK). Ces bagues ont un rôle anti-extrusion permettent un emploi à haute pression, puisque la pression du système est utilisée pour actionner les bagues d'appui. La pose de ces joints en T est simplifiée en raison de leur géométrie symétrique.

Dans ces conditions, le document EP0187606 décrit un joint d'étanchéité pour assemblage à faces planes et raccord à brides. Ce joint est en forme d'anneau et comporte une âme annulaire en graphite expansé moulé, comprise entre deux anneaux métalliques. L'anneau formé par le joint comprend deux faces parallèles planes de l'âme en graphite. Les anneaux métalliques intérieur et extérieur ont un effet ressort selon une direction axiale et présentent une paroi ondulée ayant la direction axiale pour direction principale.

Le document FR2517789 décrit un joint d'étanchéité composite pour jonction de tubes de petits diamètres et soumis à des températures élevées. Le joint comporte une âme métallique annulaire avec des rainures circulaires sur chacune de ses faces et une garniture en matériau réfractaire qui possède une reprise élastique choisie. La garniture est placée dans la rainure et fait saillie de la face du joint pour être comprimée jusqu'à l'affleurement de l'âme métallique lors du serrage.

Le document FR2850153 décrit un joint d'étanchéité comprenant une enveloppe externe métallique et une structure interne élastique. La structure interne est composée de lames flexibles superposées et séparées par des appuis. Ces appuis sont situés d'un côté et de l'autre des lames en étant décalés en quinconce.

Les documents US3260496, US3734457, WO2013144167 et WO2016006802 sont également cités à titre d'arrière plan technologique.

L'invention propose donc de s'affranchir des limitations mentionnées.

A cet effet, un objet de l'invention est un joint d'étanchéité statique de type élastiquement déformable. Ce joint d'étanchéité statique de type élastiquement déformable possède une direction axiale X perpendiculaire à un plan de joint YZ. Le joint forme une boucle close autour de la direction X parallèlement audit plan de joint et présente une section transversale dans chaque demi-plan transversal délimité par la direction axiale X, chaque demi-plan présentant une direction transversale Y dans ledit plan de joint YZ.

Selon l'invention, le joint comporte un corps monobloc en matière élastiquement déformable et tel que chaque section transversale du joint au repos est un polygone non régulier et asymétrique transversal.

Chaque section transversale du joint au repos présente :
- un secteur de sommet s'étendant d'une surface interne du secteur de sommet à une surface externe de contre appui séparées respectivement de la direction axiale X par une dimension interne minimale et une dimension externe maximale, la surface externe de contre appui délimitant extérieurement un épaulement transversal externe du joint,
- un secteur d'embase du joint situé en élévation sous le secteur de sommet, le secteur d'embase s'étendant transversalement d'une surface interne d' embase vers une surface externe de guidage séparées respectivement de la direction axiale X par une mesure interne minimale et une mesure externe maximale, la mesure interne minimale et la mesure externe maximale étant respectivement inférieures à la dimension interne minimale et à la dimension externe maximale, la surface externe de guidage étant séparée de la surface externe de contre appui par l'épaulement transversal externe,
- l'épaulement transversal externe formant un détrompeur de mise en position de montage du joint, le joint comportant une lèvre d'immobilisation interne qui est intégrée au corps monobloc entre la surface interne de sommet et la surface interne d'embase de façon proéminente intérieurement vers la direction axiale X pour former un blocage du joint en position de montage.

Selon un exemple de l'invention, le joint comporte :
- une surface supérieure du secteur de sommet qui est étendue au repos suivant la direction transversale Y et perpendiculairement à la surface externe de contre appui et à la surface interne de sommet, la surface supérieure assurant un contact étanche du joint au travail dans le plan de joint YZ,
- une surface inférieure du secteur d'embase parallèle au repos à la surface supérieure, perpendiculaire à la surface externe de guidage et à la surface interne d'embase, et opposée à la surface supérieure suivant la direction axiale X, la surface inférieure assurant un contact étanche du joint au travail dans un plan d'appui PJ du joint, et
- une surface intermédiaire du secteur de sommet agencée entre la surface supérieure et la surface inférieure formant l'épaulement transversal externe, l'épaulement étant perpendiculaire à la direction axiale X et reliant la surface externe de contre appui à la surface externe de guidage, un dégagement d'abaissement périphérique étant ménagé au bas du joint depuis l'épaulement transversal externe jusqu'à la surface inférieure, la surface de guidage étant parallèle à la direction axiale X de manière à diriger le montage du secteur d'embase suivant la direction axiale X et vers le plan d'appui PJ.

Selon une réalisation, la lèvre d'immobilisation possède une déformation contrôlée d'effacement externe suivant la direction transversale Y et comporte à un emplacement supérieur un arc de contact élastique et d'immobilisation après mise en position du joint au montage.

Selon un exemple de réalisation, le joint comporte le corps monobloc en matière élastiquement déformable à module d'Young de l'ordre de 1 MPa à 100 GPa, de sorte que l'épaulement transversal externe est venu de matière avec ledit corps.

Selon un autre exemple de réalisation, le joint comporte le corps en matière élastiquement déformable à module d'Young de l'ordre de 1 MPa à 100 GPa et une bague anti-extrusion rigide distincte, la bague anti-extrusion étant fixée par adhérence au corps pour former un contour extérieur partiel du secteur de sommet et la surface externe de contre appui, ainsi que l'épaulement au moins en partie.

Selon un exemple, la bague anti-extrusion est en un matériau à dureté d'au plus 900 HV 0,3 (dureté Vickers) ou 67 à 68 HRC (dureté Rockwell C) et choisi parmi : acier, acier inoxydable, titane, alliage de cuivre, alliage d'aluminium, plomb, polymère, fibre d'aramide, fibre de carbone, fibre de verre, graphite, céramique.

Selon un exemple, le matériau du corps est en matière élastiquement déformable choisie parmi : fluoro-élastomère, caoutchouc chloro-polyéthylène, caoutchouc polyéthylène chloro-sulfurique, caoutchouc épi-chlorhydrique, caoutchouc éthylène acrylique, caoutchouc éthylène propylène, élastomères perfluorés, tétrafluoroéthylène, polychloroprène, nitrile, silicone ou butyle.

Selon un exemple, le joint forme une boucle close à contour dans le plan de joint YZ choisi parmi : cercle, ovale, rectangle, carré et polygone.

Selon un exemple, la lèvre d'immobilisation est intermittente le long de la boucle close du joint et comporte en alternance suivant ce contour, au moins deux sections d'immobilisation en saillie de la mesure minimale du secteur d'embase et au moins deux sections en retrait, à fleur avec la mesure minimale du secteur d'embase suivant la direction transversale.

Un autre objet de l'invention est une structure sous pression positive. La structure comportant au moins une gorge pour la réception d'un joint d'étanchéité statique de type élastiquement déformable tel qu'évoqué. Des valeurs positives de pression de fluide dans la structure au travail sont de l'ordre de 42 MPa à 75 MPa. La gorge présente une section transversale non régulière et asymétrique qui comporte :
- une ouverture supérieure de passage, dans le plan de joint pour la mise en position du joint dans la gorge,
- une première face externe en vis-à-vis du secteur de sommet pour l'appui du secteur de sommet contre cette première face externe soit de la surface externe de contre appui, soit de la bague anti-extrusion de ce secteur de sommet,
- un rebord détrompeur à l'aplomb vers le plan d'appui PJ suivant la direction axiale X et en saillie de la première face externe vers l'intérieur de la gorge déterminant une face horizontale perpendiculaire à la direction axiale X suivie d'une rampe inclinée vers le fond de gorge pour faciliter l'introduction du secteur d'embase dans le fond de gorge, puis d'une deuxième face externe pour le guidage de la surface externe de guidage du secteur d'embase jusqu'au contact de la surface inférieure du secteur d'embase avec le plan d'appui PJ,

- une face interne de la gorge,
- une barrière de retenue de la lèvre proéminente vers l'extérieur de la gorge suivant la direction transversale Y et depuis la paroi interne.

Encore un autre objet de l'invention est un procédé de montage dans une structure d'un joint d'étanchéité telle qu'évoquée.

Selon l'invention, le procédé comporte :
- une étape de vérification de correspondance du joint avec une gorge de la structure,
- une étape de vérification de concordance d'au moins un marquage du joint avec des spécifications de la structure,
- une étape de mise en position adéquate du joint dans une gorge de la structure, les sections transversales du joint et de la gorge autorisant la mise en position adéquate ou interdisant toute mise en position inadéquate,
- une étape d'immobilisation par interaction entre une barrière de retenue de la gorge et la lèvre d'immobilisation du joint, et
- ensuite, une mise du joint en position de travail dans la structure, de manière à obtenir l'étanchéité statique.

L'invention et ses avantages apparaîtront avec plus de détails dans le cadre de la description qui suit avec des exemples de réalisation donnés à titre illustratif en référence aux figures annexées qui représentent :
- la figure 1 est une vue en éclaté en perspective d'un exemple de structure, équipé de quatre joints d'étanchéité haute pression respectivement installés dans quatre gorges correspondantes,
- la figure 2 est une vue en perspective d'un joint d'étanchéité selon l'invention, pourvu sur une face supérieure d'un marquage ; une lèvre d'immobilisation du joint étant intermittente,
- la figure 3A est une vue partielle en section d'un exemple de montage conforme à l'invention, d'un joint d'étanchéité dans une gorge correspondante sans bague anti-extrusion rapportée,
- la figure 3B est identique à la figure 3A mais avec une bague anti-extrusion rapportée,
- la figure 4 est une vue partielle en section d'un exemple de structure conforme à l'invention, où est visibles un joint d'étanchéité haute pression installé dans la gorge correspondante,
- la figure 5 est une vue en perspective d'une gorge dans une structure selon l'invention pour la réception d'un joint d'étanchéité ;
- la figure 6 est un diagramme schématique illustrant un exemple de procédé de montage d'un joint d'étanchéité selon l'invention,
- la figure 7 est une vue partielle en section d'un exemple de montage inadéquat d'un joint d'étanchéité dans une gorge correspondante, détrompé selon le procédé de l'invention,
- la figure 8 est une vue partielle en section d'un exemple de joint d'étanchéité selon l'invention, où un corps monobloc comporte une surface externe de guidage intégrée ;
- la figure 9 est une autre vue partielle en section du joint d'étanchéité de la figure 8 ;
- la figure 10 est une vue partielle en section d'un exemple de joint d'étanchéité selon l'invention, où une bague anti-extrusion est rapportée sur un corps monobloc ; et
- la figure 11 est autre une vue partielle en section du joint d'étanchéité de la figure 10.

Les éléments présents dans plusieurs figures distinctes ont une seule et même référence. Sur les figures, trois directions X, Y et Z orthogonales les unes par rapport aux autres sont représentées.

La direction X est dite axiale dans la mesure où des constituants de l'invention peuvent avoir dans des exemples, des formes de symétrie axiale selon la direction X. Les termes « inférieur » ou « supérieur » ou encore « médian » sont définis relativement à la direction axiale X. La direction Y, perpendiculaire à la direction axiale X, est dite transversale et la direction Z est la troisième composante d'un trièdre trirectangle XYZ. Classiquement, le terme « inférieur » indique une localisation plus proche d'un fond de gorge et le terme « supérieur » désigne une localisation plus proche d'un plan de joint. Les termes « interne » ou « externe » sont définis en rapport avec l'une ou l'autre de ces directions radiales Y ou Z. Aussi, « interne » indique une localisation plus proche d'un axe X alors que « externe » désigne une localisation plus éloignée d'un axe X.

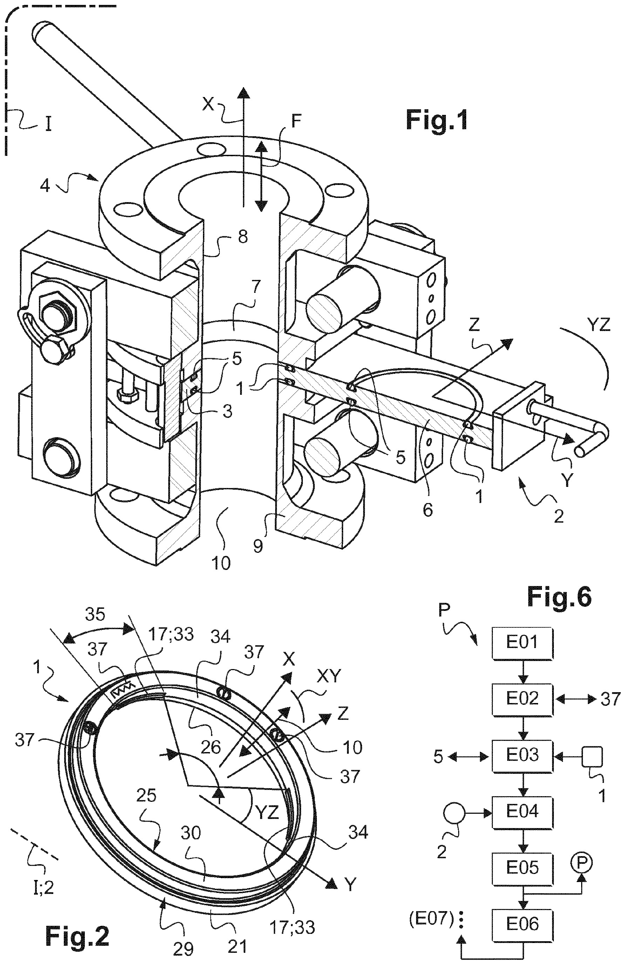

Par exemple sur la figure 1, un plan de joint YZ parallèle aux directions Y et Z et un demi-plan transversal XY qui est parallèle aux directions X et Y (ou Z) sont illustrés. Sur les figures 2-5 et 7-11 le plan transversal XY est confondu avec le plan de la feuille, et le plan de joint YZ est perpendiculaire à ce plan de la feuille.

Sur la figure 1, on voit un exemple de montage d'un joint d'étanchéité 1 sur une structure 2. Un procédé P (figure 6) expose le montage selon l'invention, d'un joint d'étanchéité 1 sur une telle structure 2. Cette structure 2 appartient à une installation I, représentée sur les figures 1 et 2.

Dans certains modes de réalisation, au moins un joint 1 est intégré à une installation I sous forme de véhicule pressurisé (tel qu'aéronef ou sous-marin), au sein d'une ouverture d'accès telle qu'une porte ou sas.

Dans d'autres réalisations, l'invention s'applique à des structures 2 intégrées à des ouvertures d'accès ou à des jonctions étanches pour équipements industriels tels qu'autoclaves, cuiseurs industriels ou autres installations I. Selon d'autres réalisations de l'invention, une structure 2 où sont montés un ou plusieurs joints 1, est intégrée à d'autres types d'installations I dans les industries chimiques, pétrolières, énergétiques, pharmaceutiques ou analogues.

Dans les exemples des figures 2-5, la structure 2 est intégrée à une canalisation dans une installation I et plus spécialement à un obturateur 4 comportant un opercule comparable à celui de la figure 1. Sur cette figure, la structure 2 correspond à un opercule 3 coulissant et l'installation I à l'obturateur 4 à action rapide.

Quatre joints déformables d'étanchéité 1 statique sont installés dans quatre gorges 5 correspondantes de l'opercule 3 qui fait ici office de structure 2. Deux gorges 5 sont prévues sur une face supérieure de la structure 2 et deux autres gorges 5 le sont sur une face inférieure qui est opposée à la face supérieure suivant la direction axiale X.

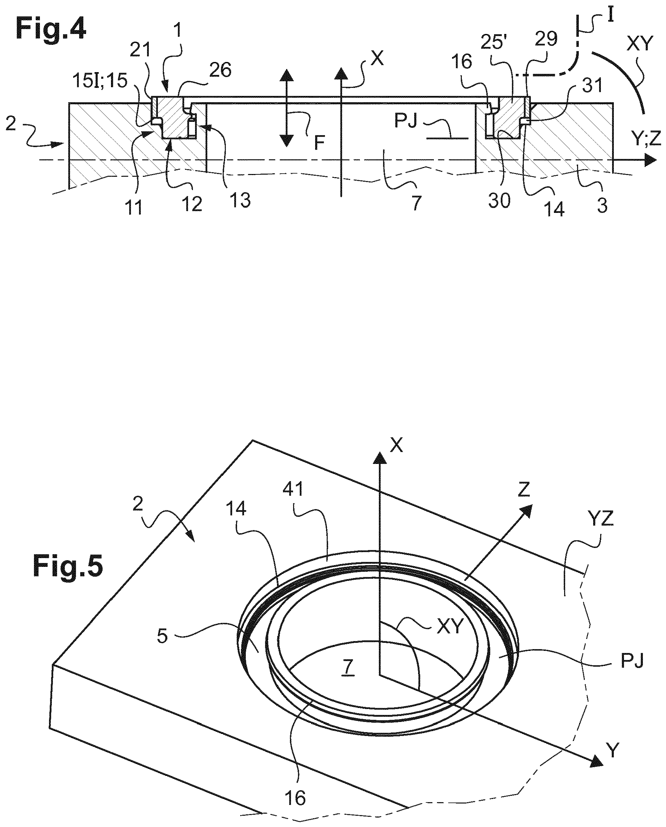

Sur la figure 4, un joint 1 selon l'invention est monté dans une gorge 5 d'une face supérieure de l'opercule 3. Une gorge 5 dite supérieure entoure respectivement un voile 6 (visible sur la figure 1) de coupure d'un flux F de fluide sous pression et une lumière de passage 7 de ce flux F sur une face supérieure de l'opercule 3. Sur l'autre face dite inférieure, un joint (non représenté) 1 selon l'invention est similairement monté dans une gorge inférieure 5 et entoure le voile de coupure 6 ainsi que la lumière de passage 7.

Au travail, la structure 2 de la figure 1, est aboutée entre un tronçon amont 8 d'une installation I telle que l'obturateur 4 et un tronçon aval 9. Ces tronçons 8 et 9 sont creux et délimitent avec la lumière 7 un passage 10 sous forme de conduite, pour un flux F de fluide sous forme solide (poudre,...), liquide ou gazeuse sous pression. Ces tronçons amont 8 et aval 9 sont rigidement fixés l'un à l'autre et hermétiquement serrés contre la structure 2 au travail, de manière démontable.

Au travail, la structure 2 selon l'invention, illustrée à la figure 4, est un opercule 3 abouté entre un tronçon amont et un tronçon aval d'une installation I formée par l'obturateur 4. Ces tronçons amont et aval sont rigidement et hermétiquement fixés à la structure 2 au travail, de manière démontable évidemment.

De manière spécifique, le joint 1 et la structure 2 selon l'invention sont constitués pour résister à d'importantes pressions positives, au travail. La pression de fluide à laquelle sont soumis le joint 1 et la structure 2 peut atteindre grâce à l'invention des valeurs positives de l'ordre de 42 MPa à 75 MPa.

Sur la figure 2 est représenté un exemple de joint d'étanchéité 1 selon l'invention, qui peut être monté sur une structure 2 quelconque, au sein d'une installation I, telles que ou autres que celle de la figure 1.

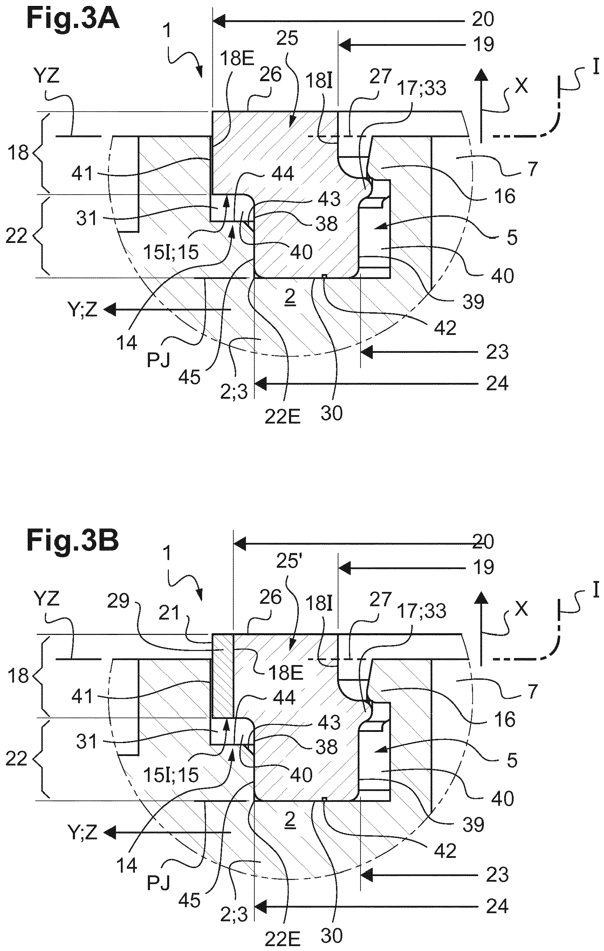

Selon les exemples des figures 3A et 3B, la structure 2 selon l'invention possède au moins une gorge 5 qui présente une section transversale spécifique dans un demi-plan XY, assurant en collaboration avec autant de joints 1, des tenues remarquables à la pression et une sécurité accrue contre les erreurs de montage, notamment.

Selon l'invention, le joint d'étanchéité 1 est de type statique et élastiquement déformable. Ce joint 1 est généralement étendu en position de travail, suivant un plan qui correspond au plan de joint YZ.

Suivant ce plan de joint YZ, le joint 1 forme une boucle close (circulaire pour l'exemple de la figure 2). Le passage de fluide 10 est étendu suivant la direction axiale X, sur la figure 2.

Selon cet exemple, le joint 1 forme dans le plan de joint YZ une boucle close à contour en cercle. Le joint 1 présente dès lors une symétrie de révolution autour de la direction X.

Dans d'autres réalisations, la forme du joint 1 en boucle close est ovale, rectangle, carrée ou polygonale, mais non exclusivement. Dans ces réalisations, les angles ou courbures présentent un rayon minimal, par exemple entre deux zones rectilignes d'un contour rectangulaire.

Dans le plan transversal XY, le joint 1 de l'invention présente une section transversale qui n'est pas circulaire par contraste avec les joints toriques, ni triangulaire ou rectangulaire. Par simplification, la section transversale du joint 1 de l'invention est contenue dans le plan transversal XY.

Selon l'invention, la section transversale du joint 1 au repos est en forme de polygone non régulier et asymétrique par rapport à la direction axiale X, et aussi par rapport à la direction transversale Y. Quant à chaque gorge 5, elle comporte une face externe 11, une face inférieure 12, une face interne 13, un rebord détrompeur 14 et une barrière de retenue 16, visibles sur la figure 4.

Comme exposé plus loin, le joint 1 est rendu asymétrique par la présence notamment d'un épaulement transversal externe 15 et d'une lèvre d'immobilisation interne 17 visibles sur les figures 3A et 3B par exemple.

En se reportant aux figures 3A et 3B, on voit que le joint 1 présente au repos, dans le plan transversal XY:
- un secteur de sommet 18 s'étendant d'une surface interne 18I du secteur de sommet 18 à une surface externe de contre appui 18E séparées respectivement de la direction axiale X par une dimension interne minimale 19 et une dimension externe maximale 20, la surface externe de contre appui 18E délimitant extérieurement un épaulement transversal externe 15 du joint 1,
- un secteur d'embase 22 du joint 1 situé en élévation partiellement sous le secteur de sommet 18, le secteur d'embase s'étendant transversalement d'une surface interne d'embase 39 vers une surface externe de guidage 38 séparées respectivement de la direction axiale X par une mesure interne minimale 23 et une mesure externe maximale 24, la mesure interne minimale 23 et la mesure externe maximale 24, étant respectivement inférieures à la dimension interne minimale 19 et à la dimension externe maximale 20, la surface externe de guidage 38 étant séparée de la surface externe de contre appui 18E par l'épaulement transversal externe 15,
- l'épaulement transversal externe 15 formant un détrompeur de mise en position de montage du joint 1, le joint 1 comportant une lèvre d'immobilisation interne 17 qui est intégrée au corps 25, 25' entre la surface interne de sommet 18I et la surface interne d'embase 39 de façon proéminente intérieurement vers la direction axiale X pour former un blocage du joint 1 en position de montage.

Sur la figure 3A, le secteur de sommet 18 comporte une surface externe de contre appui 18E et une surface interne de sommet 18I. Le secteur d'embase 22 comporte également une surface externe de guidage 38 et une surface interne d'embase 39.

La figure 3A montre que les mesures 23 (interne minimale) et 24 (externe maximale) sont respectivement inférieures aux dimensions 19 (interne minimale) et 20 (externe maximale). Par suite, le secteur de sommet 18 est décalé vers l'extérieur par rapport au secteur d'embase 22. De la sorte, le secteur de sommet 18 est déporté extérieurement (suivant Y) par rapport au secteur d'embase 22, créant ainsi une asymétrie transversale.

Suivant la direction transversale Y, la surface de contre appui 18E du secteur de sommet 18 ne surplombe donc pas le secteur d'embase 22. L'épaulement 15 est ainsi essentiellement en saillie du secteur d'embase 22 transversalement vers l'extérieur du joint 1.

En d'autres termes, la mesure externe maximale 24 s'étend à distance intérieurement de l'aplomb de l'épaulement transversal externe 15. Les mesure et dimension internes minimales 19, 23 s'étendent quant à elles en décrochement interne de la lèvre d'immobilisation interne 17, suivant la direction transversale Y. Par suite, l'invention offre un détrompeur asymétrique contre tout risque de montage à l'envers du joint 1.

Sur les figures 2 ou 3A, le joint 1 comporte un corps 25 monobloc. Le corps 25 monobloc forme les secteurs de sommet 18 et d'embase 22. Ainsi, le corps 25 monobloc définit une surface supérieure 26 du joint 1 entre l'extrémité externe des dimensions 19 et 20.

On voit sur la figure 4 que la surface 26 du corps 25' au repos, est étendue suivant la direction transversale Y (et bien sûr suivant la direction Z).

En position de montage, la surface 26 dépasse d'une ouverture supérieure de passage 27 de la gorge 5, visible sur les figures 3A et 3B. Cette surface 26 et donc le sommet du joint 1 sont en saillie de 0.5mm à 4mm de l'ouverture 27, i.e. du plan de joint YZ de cette structure 2 en position de montage. On comprend déjà qu'au travail, la surface supérieure 26 est généralement étendue à fleur de l'ouverture de la structure 2, dans le plan de joint YZ.

Quant à la lèvre 17, elle est intégrée au corps 25, 25' et est mitoyenne aux secteurs d'embase 22 et de sommet 18, de façon proéminente suivant la direction transversale Y, vers l'intérieur du joint 1 c'est-à-dire dirigée vers la direction Y, pour former une immobilisation du joint 1 en position de montage.

Par suite, le corps 25, 25' intègre le secteur d'embase 22, la lèvre 17, l'épaulement 15 et donc le secteur de sommet 18, qui sont venus de matière les uns avec les autres.

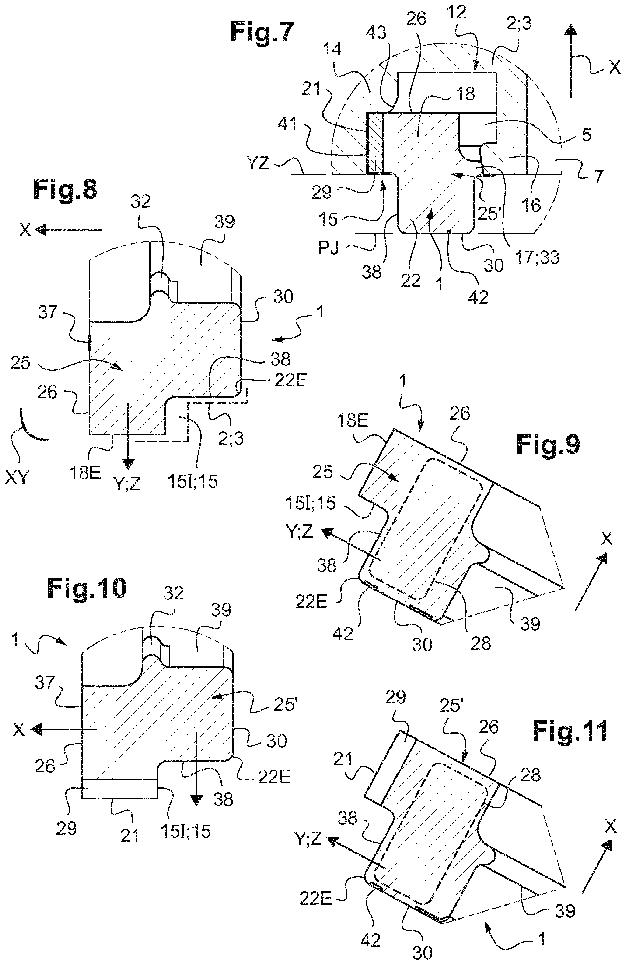

On remarque que le corps 25 forme un noyau central 28 (illustré en pointillés aux figures 9 et 11) étendu axialement de haut en bas du joint 1 et sur une largeur transversale comprise entre 50% et 60% de la distance entre la surface externe de contre appui 18E et une extrémité transversale de la lèvre 17. De par ses dimensions axiales, de la surface 26 au plan d'appui PJ, le noyau 28 est moins sensible aux déformations que l'épaulement 15 et la lèvre 17. Au travail, c'est au droit de ce noyau 28 et grâce à son élasticité que s'opère l'étanchéité en poussant la surface 26 contre la structure 2 au plan de joint YZ et entre le secteur d'embase 22 et le plan d'appui PJ de la gorge 5.

Le corps 25, 25' est par exemple moulé en matière élastiquement déformable. Dans la réalisation des figures 2-4, la matière élastiquement déformable du corps 25, 25' présente un module d'Young de l'ordre de 1MPa à 100 GPa.

Un des buts de ceci est d'obtenir que la lèvre d'immobilisation 17 possède une déformation contrôlée d'effacement externe suivant la direction transversale Y. Ceci permet d'assurer la mise en place et le maintien en place du joint 1 dans la gorge 5 correspondante. Similairement, ce module est déterminé pour obtenir une déformation contrôlée de l'épaulement 15.

Ce corps 25, 25' est e.g. en matière élastiquement déformable choisie parmi : fluoro-élastomère FKM ou FFKM, caoutchouc chloro-polyéthylène, caoutchouc polyéthylène chloro-sulfurique, caoutchouc épi-chlorhydrique, caoutchouc éthylène acrylique, caoutchouc éthylène propylène ou élastomères perfluorés, tétrafluoroéthylène, polychloroprène, nitrile, silicone ou butyle.

Par exemple, la matière est un polymère de type VITON ® 70 à 90 Shore de la Société DUPONT. Cette matière présente notamment une dureté Shore A de 70+/-5 testée à 72, une résistance à la tension minimale de 12.31 MPa, une élongation minimale admise de 175% testée jusqu'à 211% et un module d'Young à 100% de 6.24 MPa.

Les figures 8-9 et les figures 10-11 montrent deux réalisations du joint 1 et en particulier du corps 25, 25'.

Sur les figures 8-9, le joint 1 est monobloc et constitué par le corps 25 en matière élastiquement déformable, de sorte que l'épaulement transversal externe 15 et la lèvre d'immobilisation 17 sont conjointement venus de matière. Par suite, le corps 25 définit la surface externe de guidage 38. Dans une telle réalisation, la surface externe de contre appui 18E venue de matière peut subir un traitement de surface visant son durcissement, par exemple par réaction photochimique locale, impression locale de revêtement, dépose locale de revêtement ou analogues.

Sur les figures 10-11 (et 2, 3B-4, 7), le joint 1 comporte le corps 25' en matière élastiquement déformable et une bague anti-extrusion 29 rapportée. Cette bague anti-extrusion 29 est rigide, distincte du corps 25' et prolonge l'épaulement 15.

Dans ces réalisations, la bague anti-extrusion 29 est fixée par adhérence pour former le contour extérieur du secteur de sommet 18 à la façon d'une ceinture. La surface externe 21 de cette bague anti-extrusion 29 vient donc transversalement en bout de l'épaulement 15.

Dans le cas de la figure 3B et comme vu précédemment, la bague anti-extrusion 29 prolonge extérieurement, selon la direction Y, le secteur de sommet 18 et participe alors à agrandir l'épaulement transversal externe 15 ainsi qu'à la mise en place du joint au montage puis en position de travail.

Dans des réalisations, la bague anti-extrusion 29 est en matériau à dureté d'au plus 900 HV 0,3 en dureté Vickers ou 67 à 68 HRC en dureté Rockwell C et est choisi parmi : acier, acier inoxydable, titane, alliage de cuivre, alliage d'aluminium, plomb, polymère, fibre d'aramide, fibre de carbone, fibre de verre, graphite, céramique.

Un but de cette rigidité est d'assurer un maintien efficace de la périphérie du joint 1 à l'intérieur de la gorge 5, lors du passage de la position de montage à la position de travail, pour que la bague anti-extrusion 29 ait une fonction anti-extrusion. On entend par fonction « anti-extrusion » le fait qu'il s'agit d'éviter un risque de migration de la matière élastiquement déformable sur les faces supérieure ou inférieure d'une structure 2, telle qu'un opercule coulissant 3 par exemple.

Selon l'invention, la surface supérieure 26 du secteur de sommet 18 assure un contact étanche du joint 1 au travail dans le plan de joint YZ. Le joint 1, et en particulier le corps 25, 25', présente également une surface inférieure 30, qui est parallèle au repos à la face supérieure 26. La surface 30 est opposée à la surface 26 suivant la direction axiale X et assure un contact étanche du joint 1 au travail en fond de gorge 5, contre le plan d'appui PJ.

Entre la surface 30 et la surface externe de guidage 38 du joint 1, est formé un arrondi de centrage 22E (figures 8 à 11). L'arrondi de centrage 22E permet au joint 1 de facilement pénétrer au fond de la gorge 5 de la structure 2, compte tenu de l'effet associé d'une rampe 43 de ladite structure 2, comme décrit par la suite. Cet arrondi de centrage 22E participe ainsi à la mise en position adéquate du secteur d'embase 22 du joint 1, la surface externe 38 faisant office de guidage.

Les figures 3A, 4 montrent que le positionnement du joint 1 au montage dans la gorge 5 laisse libre un dégagement d'abaissement périphérique 31. Ce dégagement d'abaissement périphérique 31 est ménagé au bas du joint 1 entre l'épaulement 15 et la surface inférieure 30. Le dégagement 31 est axialement sous la surface externe de contre appui 18E.

Du fait de la déformation contrôlée de la matière du corps 25, 25', lors du passage de la position de montage à la position de travail, la surface externe de contre appui 18E dirige la déformation de l'épaulement 15 suivant la direction axiale X et vers le plan d'appui PJ, de sorte que cet épaulement descend et comble en partie le dégagement 31.

Dans le cas de la figure 3B, la surface externe 21 de la bague anti-extrusion 29 guide cette déformation de l'épaulement 15.

En d'autres termes, les surfaces 18E et 21 conduisent la déformation de l'épaulement 15 à sa mise au travail, suivant la direction axiale X et vers le fond de gorge 5 (i.e. vers le plan d'appui PJ) et à l'intérieur du dégagement. Ceci participe à un contact hautement étanche au niveau des surfaces 26 et 30, et donc du noyau 28. En comparaison avec les joints connus, l'étendue disponible selon l'invention est particulièrement importante, dans le plan de joint YZ et respectivement dans le plan d'appui du joint PJ, c'est-à-dire perpendiculairement à la direction axiale X. De fait, grâce à ces surfaces 26 et 30 aux larges dimensions où s'opère l'étanchéité statique entre le joint 1 et la structure 2, l'invention apporte une sécurité inégalée à ce jour, notamment face à des pressions importantes.

La lèvre d'immobilisation 17 a une fonction de blocage du joint 1 dans la gorge 5, lors du montage. La lèvre d'immobilisation 17 présente une forme de jonc à des emplacements supérieur, inférieur et transversal de la lèvre 17.

Sur les figures 8 et 10, la lèvre 17 présente un arc de contact 32 qui est élastique et d'immobilisation après mise en position du joint 1 dans la gorge 5. On comprend qu'en raison de sa forme galbée, la lèvre 17 peut être insérée pour un agrafage élastique (en anglais : « clipping ») dans la gorge 5. Cet arc 32 évite alors des blessures et amorces de ruptures, lors du montage du joint 1 dans la gorge 5, ce qui implique une déformation contrôlée de la lèvre 17.

Suivant la direction axiale X, la lèvre 17 est étendue en majeure partie au sein du secteur de sommet 18, seule la courbure de rattrapage du bas de la lèvre 17 étant située au sein de la section d'embase 22.

Dans des réalisations de l'invention, la lèvre d'immobilisation 17 est continue le long de la boucle close du joint 1, c'est-à-dire que cette lèvre 17 est étendue sur toute la périphérie interne du corps 25, 25' et donc du joint 1.

Dans la réalisation de l'invention illustrée sur la figure 2, la lèvre d'immobilisation 17 est intermittente le long de la boucle close du joint 1 et comporte en alternance suivant ce contour, au moins deux sections d'immobilisation 33 ou joncs en saillie vers l'intérieur transversalement, depuis la mesure minimale 23. Au moins deux sections en retrait 34, sont à fleur avec la mesure minimale 23 du secteur d'embase 22, suivant la direction transversale Y.

Dans cette réalisation, chaque section d'immobilisation 33 est étendue sur un angle d'ouverture 35, par exemple de l'ordre de 30° +/-20°. Chaque section en retrait 34 est étendue sur un angle d'espacement 36, par exemple de l'ordre de 120° +/- 10°.

Sur la figure 2, divers marquages 37 sont apposés sur le corps 25. Sur la figure 2, les marquages sont apposés sur la surface inférieure 30 du joint. Sur les figures 3A, 3B, 7-9, la référence 42 correspond à la trace d'un marquage 37.

Dans cette réalisation, au moins un des marquages 37 est venu de moulage à l'injection du corps 25. Dans d'autres réalisations, au moins un autre marquage 37 est réalisé après moulage du corps 25, par exemple par estampillage à chaud ou analogues.

Sur les figures 8 et 10, le marquage est préférentiellement formé sur la surface supérieure 26 afin d'être visible une fois le joint 1 monté.

Dans ce type de réalisation, l'agencement de plusieurs marquages 37 est comparable à celui de la figure 2 où un marquage 37 (à gauche) est un dateur identifiant la date de production du joint 1, typiquement par moulage injection (un cadran à 12 numéros et un identifiant alphanumérique central). Un autre marquage 37 dit central indique la nature de la matière du joint 1 élastiquement déformable et est en forme de cadran à 12 numéros. Un marquage 37 supplémentaire (à droite) est un indicateur de la dureté de la matière élastiquement déformable et est en forme de cadran à 12 numéros. Bien entendu, d'autres marquages sont possibles.

On remarque sur les figures 8-11 que la jonction de forme entre l'épaulement 15 et la surface de guidage 38 du joint 1, définie par le corps 25, 25', est concave et bombée. Similairement, les jonctions entre la surface externe de guidage 38 et la surface inférieure 30, ainsi qu'entre cette surface 30 et une surface interne d'embase 39 sont convexes et bombées constituant de la sorte des arrondis respectifs de centrage 22E. Ceci vise à faciliter le montage et éviter les blessures du joint.

Avant de décrire la structure 2, notons que sur les figures 3A, 3B et 4 le joint étant au repos, est ménagé un volume vide d'expansion 40 du joint 1 dans sa gorge 5.

En section transversale, relativement à la surface du joint 1, ce volume 40 est de l'ordre de 12%. Les figures 3A-3B montrent que ce volume 40 est divisé en deux parties, de part et d'autre du noyau central 28. Le volume 40 comporte une partie externe à savoir, le dégagement d'abaissement périphérique 31 entre la gorge 5 et la surface externe de guidage 38 ainsi qu'une partie interne entre la surface interne d'embase 39 (figures 8 à 11) et la gorge 5.

En se rapportant aux figures 3-5, on voit que la structure 2 et en particulier chaque gorge 5 présente une section transversale en polygone non régulier et asymétrique suivant les directions axiale X et transversale Y.

On a vu que la gorge 5 comporte une ouverture supérieure de passage 27, dans le plan de joint YZ pour la mise en position du joint 1 dans la gorge 5. La gorge 5 possède une face interne 13 et un rebord détrompeur 14 situé à l'aplomb vers le fond de gorge 5 suivant la direction axiale X c'est-à-dire vers le plan d'appui PJ et en saillie d'une première face d'appui externe 41, vers l'intérieur de la gorge 5 suivant la direction transversale Y (figures 3A, 3B et 4).

Selon l'invention, chaque face d'appui externe 41 est agencée pour l'appui et le guidage par glissement soit de la surface externe 21 de la bague anti-extrusion 29 (figure 3B), soit de la surface externe de contre appui 18E du joint 1 (figure 3A).

Le rebord détrompeur 14 comprend une face horizontale 44, perpendiculaire à la direction axiale X, suivie d'une rampe 43 inclinée vers le fond de la gorge 5 pour faciliter l'introduction du secteur d'embase 22 dans le fond de la gorge 5, en coopération avec l'arrondi de centrage 22E du secteur d'embase 22. Cette rampe est elle-même suivie d'une deuxième face externe 45 pour le guidage de la surface externe de guidage 38 du secteur d'embase 22 jusqu'au contact de ce secteur d'embase 22 avec le plan d'appui PJ du fond de gorge 5.

Selon l'invention, chaque gorge 5 comporte une barrière de retenue 16 pour coopérer avec la lèvre 17. On a vu que cette barrière 16 est proéminente vers l'extérieur de la gorge 5 suivant la direction transversale Y et depuis une paroi interne 13 qui forme la face interne 13 de la gorge 5. Cette barrière 16 assure le maintien par agrafage élastique, et ainsi l'immobilisation du joint 1 dans la gorge 5.

En se reportant à la figure 6, le procédé P de montage de l'invention est alors décrit. Ce procédé P comporte :
- une étape de vérification de correspondance E01 du joint 1 avec une gorge 5 de la structure 2,
- une étape de vérification de concordance E02 d'au moins un marquage 37 du joint 1 avec des spécifications de la structure 2,
- une étape de mise en position E03 adéquate du joint 1 dans une gorge 5 de la structure 2, les sections transversales du joint 1 et de la gorge 5 autorisant la mise en position adéquate ou interdisant toute mise en position inadéquate (voir commentaires sur la figure 7 plus bas),
- une étape d'immobilisation E04 par interaction entre la barrière de retenue 16 et la lèvre d'immobilisation 17, et
- ensuite, une étape E05 de mise du joint 1 en position de travail dans la structure 2, de manière à obtenir l'étanchéité statique.

Le cas échéant, le procédé P comporte comme sur la figure 6, une étape de retrait E06 du joint 1 hors de la gorge 5, par exemple pour une opération de maintenance régulière, exceptionnelle ou programmée. En cas de changement du joint 1, le procédé comporte alors une étape de retour E07 en début de procédé P.

Pour illustrer l'étape de mise en position E03 adéquate du joint 1 dans une gorge 5 de la structure 2, la figure 7 montre un exemple de montage inadéquat d'un joint d'étanchéité 1 dans une gorge 5 correspondante, détrompé selon le procédé de l'invention.

En effet, on constate que le joint 1 ne pénètre pas correctement dans la gorge 5, laissant un jour entre la face inférieure 12 de la gorge 5 et la surface (normalement supérieure) 26 du joint. Egalement, la lèvre 17 ne passe pas la barrière 16, restant essentiellement dans un biseau d'introduction. Dans ce cas, avec un sens de montage erroné du joint 1 qui est retourné transversalement de 180° par rapport à sa position de montage effective, la déformation contrôlée de ce joint 1 est impossible. De fait, tout serrage d'une pièce partageant le plan de joint YZ avec la structure 2 est impossible, le secteur d'embase 22 restant hors de la gorge 5 et faisant obstacle au rapprochement relatif de la pièce et de la structure 2, vers le plan de joint YZ.

Grâce à l'invention, une étanchéité statique entre un tronçon amont et un tronçon aval de conduite de canalisation de fluide sous haute pression est obtenue, et permet également une température de -100°C à +320°C pour le fluide circulant dans la structure 2.

Contrairement aux étanchéités connues, l'invention permet avantageusement qu'au repos soit ménagé un volume vide d'expansion d'un joint 1 dans sa gorge 5 polygonale à épaulement et lèvre, de l'ordre de 12%. Ce volume vide assure une excellente expansion d'un joint 1 dans sa gorge 5 et une bonne répartition des parties du joint 1 se déformant, dans les volumes vides au repos, lors de l'expansion qui favorise un contour du joint 1 déformé garantissant une étanchéité certaine.

L'invention garantit une étanchéité statique, durable et fiable même lorsque la pression du fluide dans la structure 2 dépasse des valeurs spécialement élevées.

Par ailleurs, lors du montage in situ, l'invention évite les erreurs humaines quant au modèle de joint 1 de forme inappropriée qui doit être installé dans une gorge 5 donnée.

Aussi, l'invention évite qu'un joint de forme acceptable mais de composition inappropriée de matériau(x) risque d'être installé suite à une erreur humaine, puisque le marquage permet une vérification de concordance ainsi qu'une vérification de la date limite d'adéquation du joint 1.

Avec l'invention, il est aisé en pratique, d'être certain que le joint 1 approprié est effectivement installé in situ. Egalement, grâce à la section transversale non circulaire et possédant un sens recto-verso de montage du joint 1 et de sa gorge 5 correspondante, il est maintenant aisé d'être certain que le joint 1 est monté à l'intérieur de la gorge 5 dans une position et de manière convenable.

En outre, grâce à la lèvre d'immobilisation, l'invention garantit le maintien du joint 1 au repos à l'intérieur de la gorge 5, depuis le moment de son montage jusqu'à ce que l'étanchéité soit obtenue. Lors du serrage de l'état de repos vers l'état de travail, l'invention assure une déformation progressive et répartie du joint 1 qui évite d'altérer son intégrité. En particulier le joint 1 selon l'invention ne risque plus d'être blessé ou abimé dans la mesure où la forme à coins arrondis en section du joint 1 assure une introduction douce dans la gorge 5. On évite ainsi les amorces de rupture.

En outre, le joint 1 est spécialement robuste, simple et compact tout en pouvant être produit de manière économique, typiquement par moulage, injection, y compris dans le cadre de séries limitées.

Naturellement, l'invention est sujette à des variations de mise en oeuvre. Bien que plusieurs modes de réalisation aient été décrits, il n'est pas concevable d'identifier tous les modes de réalisation de l'invention. Ainsi, certains modes de réalisation prévoient de remplacer un moyen décrit par un moyen équivalent tout en restant dans le cadre de l'invention.

**Tableau 1**

| REFERENCE | DESIGNATION |
|---|---|
| X | direction axiale |
| Y | direction transversale |
| Z | direction radiale |
| XY | plan transversal |
| YZ | plan de joint |
| PJ | plan d'appui du joint |
| F | flux de fluide |
| P | procédé de montage |
| I | installation |
| E01 | étape de vérification de correspondance |
| E02 | étape de vérification de concordance |
| E03 | étape de mise en position |
| E04 | étape d'immobilisation |
| E05 | étape de mise sous pression |
| E06 | étape de retrait du joint |
| E07 | étape de retour en début de procédé |
| 1 | joint d'étanchéité |
| 2 | structure |
| 3 | opercule coulissant |
| 4 | ensemble e.g. obturateur |
| 5 | gorge |
| 6 | voile de coupure |
| 7 | lumière de passage |
| 8 | tronçon amont |
| 9 | tronçon aval |
| 10 | passage de fluide |
| 11 | face externe |
| 12 | face inférieure |
| 13 | face interne |
| 14 | rebord détrompeur |
| 15 | épaulement transversal externe |
| 15I | surface intermédiaire |
| 16 | barrière de retenue |
| 17 | lèvre d'immobilisation interne |
| 18 | secteur de sommet |
| 18I | surface interne de sommet |
| 18E | surface externe de contre appui |
| 19 | dimension interne minimale |
| 20 | dimension externe maximale |
| 21 | surface externe de bague |
| 22 | secteur d'embase |
| 22E | arrondi de centrage |
| 23 | mesure interne minimale |
| 24 | mesure externe maximale |
| 25, 25' | corps |
| 26 | surface supérieure |
| 27 | ouverture supérieure de passage |
| 28 | noyau central |
| 29 | bague anti-extrusion |
| 30 | surface inférieure |
| 31 | dégagement d'abaissement périphérique |
| 32 | arc de contact |
| 33 | sections d'immobilisation ou joncs en saillie |
| 34 | sections en retrait |
| 35 | angle d'ouverture |
| 36 | angle d'espacement |
| 37 | marquage |
| 38 | surface externe de guidage |
| 39 | surface interne d'embase |
| 40 | volume vide d'expansion |
| 41 | première face d'appui externe |
| 42 | marquage |
| 43 | rampe inclinée |
| 44 | face horizontale |
| 45 | deuxième face externe |

## Revendications

1. Joint (1) d'étanchéité statique de type élastiquement déformable, ce joint (1) s'étendant en élévation parallèlement à une direction axiale (X) perpendiculaire à un plan de joint (YZ), le joint (1) formant une boucle close autour de la direction axiale (X) et présentant une section transversale dans chaque demi-plan transversal (XY) délimité par la direction axiale (X), chaque demi-plan présentant une direction transversale (Y) dans ledit plan de joint (YZ),
**caractérisé en ce que** le joint (1) comporte un corps (25, 25') en matière élastiquement déformable, chaque section transversale du joint (1) au repos étant un polygone non régulier et asymétrique transversal, chaque section transversale comprenant :
- un secteur de sommet (18) s'étendant d'une surface interne (18I) du secteur de sommet (18) à une surface externe de contre appui (18E) séparées respectivement de la direction axiale (X) par une dimension interne minimale (19) et une dimension externe maximale (20), la surface externe de contre appui (18E) délimitant extérieurement un épaulement transversal externe (15) du joint (1),
- un secteur d'embase (22) du joint (1) situé en élévation partiellement sous le secteur de sommet (18), le secteur d'embase (22) s'étendant transversalement d'une surface interne d'embase (39) vers une surface externe de guidage (38) séparées respectivement de la direction axiale (X) par une mesure interne minimale (23) et une mesure externe maximale (24), la mesure interne minimale (23) et la mesure externe maximale (24), étant respectivement inférieures à la dimension interne minimale (19) et à la dimension externe maximale (20), la surface externe de guidage (38) étant séparée de la surface externe de contre appui (18E) par l'épaulement transversal externe (15),
- l'épaulement transversal externe (15) formant un détrompeur de mise en position de montage du joint (1), le joint (1) comportant une lèvre d'immobilisation interne (17) qui est intégrée au corps (25, 25') entre la surface interne de sommet (181) et la surface interne d'embase (39) de façon proéminente intérieurement vers la direction axiale (X) pour former un blocage du joint (1) en position de montage.

2. Joint (1) selon la revendication 1,
**caractérisé en ce que** le joint (1) comporte :
- une surface supérieure (26) du secteur de sommet (18) qui est étendue au repos suivant la direction transversale (Y) et perpendiculairement à la surface externe de contre appui (18E) et à la surface interne de sommet (18I), la surface supérieure (26) assurant un contact étanche du joint (1) au travail dans le plan de joint (YZ),
- une surface inférieure (30) du secteur d'embase (22) parallèle au repos à la surface supérieure (26), perpendiculaire à la surface externe de guidage (38) et à la surface interne d'embase (39) et opposée à la surface supérieure suivant la direction axiale (X), la surface inférieure (30) assurant un contact étanche du joint (1) au travail dans un plan d'appui (PJ) du joint (1), et
- une surface intermédiaire (151) du secteur de sommet (18) agencée entre la surface supérieure (26) et la surface inférieure (30) formant l'épaulement transversal externe (15), l'épaulement (15) étant perpendiculaire à la direction axiale (X) et reliant la surface externe de contre appui (18E) à la surface externe de guidage (38), un dégagement d'abaissement périphérique (31) étant ménagé au bas du joint (1) depuis l'épaulement transversal externe (15) jusqu'à la surface inférieure (30), la surface de guidage (38) étant parallèle à la direction axiale (X) de manière à diriger le montage du secteur d'embase (22), suivant la direction axiale (X) et vers le plan d'appui (PJ).

3. Joint (1) selon l'une quelconque des revendications 1 à 2,
**caractérisé en ce que** la lèvre d'immobilisation (17) possède une déformation contrôlée d'effacement externe suivant la direction transversale (Y) et comporte à un emplacement supérieur un arc de contact (32) élastique et d'immobilisation après mise en position du joint (1) au montage.

4. Joint (1) selon l'une quelconque des revendications 1 à 3,
**caractérisé en ce que** le joint (1) est monobloc et constitué par le corps (25) en matière élastiquement déformable à module d'Young de l'ordre de 1 MPa à 100 GPa, de sorte que l'épaulement transversal externe (15) est venu de matière avec le corps (25).

5. Joint (1) selon l'une quelconque des revendications 1 à 3,
**caractérisé en ce que** le joint (1) comporte le corps (25') en matière élastiquement déformable à module d'Young de l'ordre de 1 MPa à 100 GPa et une bague anti-extrusion rigide (29) distincte, la bague anti-extrusion (29) étant fixée par adhérence au corps (25') pour former un contour extérieur partiel du secteur de sommet et la surface externe (21) de cette bague anti-extrusion, ainsi que l'épaulement (15) au moins en partie.

6. Joint (1) selon la revendication 5,
**caractérisé en ce que** la bague anti-extrusion (29) est en un matériau à dureté d'au plus 900 HV 0,3 (dureté Vickers) ou 67 à 68 HRC (dureté Rockwell C) et choisi parmi : acier, acier inoxydable, titane, alliage de cuivre, alliage d'aluminium, plomb, polymère, fibre d'aramide, fibre de carbone, fibre de verre, graphite, céramique.

7. Joint (1) selon l'une quelconque des revendications 1 à 6,
**caractérisé en ce que** le matériau du corps (25, 25') est en matière élastiquement déformable choisie parmi : fluoro-élastomère, caoutchouc chloro-polyéthylène, caoutchouc polyéthylène chloro-sulfurique, caoutchouc épi-chlorhydrique, caoutchouc éthylène acrylique, caoutchouc éthylène propylène, élastomères perfluorés, tétrafluoroéthylène, polychloroprène, nitrile, silicone ou butyle.

8. Joint (1) selon l'une quelconque des revendications 1 à 7,
**caractérisé en ce que** le joint (1) forme une boucle close à contour dans le plan de joint (YZ) choisi parmi : cercle, ovale, rectangle, carré et polygone.

9. Joint (1) selon l'une quelconque des revendications 1 à 8,
**caractérisé en ce que** la lèvre d'immobilisation (17) est intermittente le long de la boucle close du joint (1) et comporte en alternance suivant ce contour, au moins deux sections d'immobilisation (33) en saillie de la mesure minimale du secteur d'embase (18) et au moins deux sections en retrait (34), à fleur avec la mesure minimale du secteur d'embase (18) suivant la direction transversale (Y).

10. Joint (1) selon l'une quelconque des revendications 1 à 9,
**caractérisé en ce que** le joint (1) comprend un arrondi de centrage (22E) entre la surface externe de guidage (38) et la surface inférieure (30).

11. Structure (2) sous pression positive, la structure (2) comportant au moins une gorge (5),
**caractérisé en ce que** un joint (1) d'étanchéité statique de type élastiquement déformable selon l'une quelconque des revendications 1 à 10 est agencé dans la gorge (5), des valeurs positives de pression de fluide dans la structure (2) au travail étant de l'ordre de 42 MPa à 75 MPa, la gorge (5) présente une section transversale non régulière et asymétrique qui comporte :
- une ouverture (27) supérieure de passage, dans le plan de joint (YZ) pour la mise en position du joint (1) dans la gorge (5),
- une première face externe (41) en vis-à-vis du secteur de sommet (18) pour l'appui du secteur de sommet contre cette première face externe (41) soit de la surface externe de contre appui (18E), soit de la surface externe (21) de la bague anti-extrusion (29),
- un rebord détrompeur (14) à l'aplomb vers le plan d'appui (PJ) suivant la direction axiale (X) et en saillie de la première face d'appui (41) vers l'intérieur de la gorge (5) déterminant une face horizontale (44) perpendiculaire à la direction axiale (X) suivie d'une rampe inclinée (43) vers le fond de gorge (5) pour faciliter l'introduction du secteur d'embase (22) dans le fond de gorge (5) puis d'une deuxième face externe (45) pour le guidage de la surface externe de guidage (38) du secteur d'embase (22) jusqu'au contact du secteur d'embase (22) avec le plan d'appui (PJ) en fond de gorge (5),
- une face interne de la gorge (5),
- une barrière de retenue (16) de la lèvre (17), proéminente vers l'extérieur de la gorge (5) suivant la direction transversale (Y) et depuis la face interne (13).

12. Procédé (P) de montage dans une structure (2) d'un joint (1) d'étanchéité selon l'une quelconque des revendications 1 à 10,
**caractérisé en ce que** le procédé (P) comporte :
- une étape de vérification (E01) de correspondance du joint (1) avec une gorge (5) de la structure (2),
- une étape de vérification de concordance (E02) d'au moins un marquage (37) du joint (1) avec des spécifications de la structure (2),
- une étape de mise en position (E03) adéquate du joint (1) dans la gorge (5) de la structure (2), les sections transversales du joint (1) et de la gorge (5) autorisant la mise en position adéquate ou interdisant toute mise en position inadéquate,
- une étape d'immobilisation (E04) par interaction entre une barrière de retenue (16) de la gorge (5) et la lèvre d'immobilisation interne (17) du joint (1), et
- ensuite, une mise en position (E05) de travail du joint (1) dans la structure (2) de manière à obtenir l'étanchéité statique.
